# EUROPÄISCHE PATENTSCHRIFT

(11) **EP 4 214 045 B1**
(45) Veröffentlichungstag und Bekanntmachung des Hinweises auf die Patenterteilung: **11.02.2026**
(21) Anmeldenummer: 21773096.9
(22) Anmeldetag: 08.09.2021
(51) Int. Cl.: B29C 44/34, C08J 9/18, B29D 35/12, C08J 9/12

(54) **HERSTELLUNG EINER FORMGESCHÄUMTEN SCHUHKOMPONENTE MITTELS VORBEHANDLUNG IN EINEM AUTOKLAV**
PRODUCTION OF A FORM-MOLDED SHOE COMPONENT BY WAY OF PRE-TREATMENT IN AN AUTOCLAVE
FABRICATION D'UN COMPOSANT DE CHAUSSURE MOULÉ PAR EXPANSION AU MOYEN D'UN PRÉTRAITEMENT DANS UN AUTOCLAVE

(30) Priorität: 15.09.2020 CH 11622020
(43) Veröffentlichungstag der Anmeldung: 26.07.2023
(73) Patentinhaber: On Clouds GmbH, 8005 Zürich (CH)
(72) Erfinder: ROMAIN, Jean-Philippe, 8005 Zürich (CH); ROSCHER, Sebastian, 8005 Zürich (CN); ALTROGGE, Nils, 8005 Zürich (CH); HEITZ, Ilmarin, 8005 Zürich (CH)
(74) Vertreter: Rentsch Partner AG
(86) Internationale Anmeldenummer: PCT/EP2021/074682
(87) Internationale Veröffentlichungsnummer: WO 2022/058212

(56) Entgegenhaltungen:
- EP-A1- 3 616 875
- CN-A- 111 055 420

## Beschreibung

### Technisches Gebiet

Die vorliegende Erfindung betrifft das technische Gebiet der Schuhherstellung, insbesondere geschäumter Schuhkomponenten und betrifft ein Verfahren zur Herstellung einer formgeschäumten Schuhkomponente.

### Stand der Technik

Formgeschäumte Materialien weisen eine Vielzahl von Poren, bzw. Zellen im Schaummaterial auf, wodurch formgeschäumte Materialien besonders geeignet sind als Dämpfungselemente, wie beispielsweise Schuhsohlen. Typischerweise werden solche Schäume mithilfe von Treibmittelzusätzen hergestellt. Ein Polymermaterial, typischerweise ein thermoplastisches Polymer, wie thermoplastisches Polyurethan, wird dabei in einem Extruder geschmolzen. Typischerweise wird dem Polymermaterial ein Treibmittelzusatz beigemischt, welches unter vordefinierten Bedingungen expandiert und dabei die Poren, bzw. Zellen, im formgeschäumten Material ausbilden kann. Bei Treibmittelzusätzen wird typischerweise zwischen chemischen und physikalischen Treibmitteln unterschieden. Physikalische Treibmittel sind solche, welche direkt durch Änderung physikalischer Parameter, wie Druck und Temperatur, expandieren oder vom flüssigen oder festen Aggregatszustand in den gasförmigen Zustand übergehen können. Bekannte physikalische Treibmittel sind CO₂, Stickstoff, Wasser, Kohlenwasserstoffe wie Propan, Butan, Pentan oder Hexan, und Kohlenwasserstoffderivate, insbesondere halogenierte Derivate wie Dichlormethan, Chloroform oder Fluorkohlenwasserstoffe. Chemische Treibmittel sind Treibmittel, aus welchen ein Treibmittel *in situ* unter vorbestimmten Bedingungen durch chemische Reaktion freigesetzt werden kann. Hierzu zählen beispielsweise Diazoverbindungen (Freisetzung von N₂), Metallhydride (Freisetzung von H₂) und Carbonate (Freisetzung von CO₂).

Als Sonderfall bei physikalischen Treibmitteln haben sich Treibmittel etabliert, die als superkritisches Fluid (SCF) vorliegen. Der bekannteste Prozess, bei welchem SCF eingesetzt werden, ist das sogenannte MuCell^{®} Verfahren. Hierbei wird in einem Extruder eine Polymerzusammensetzung mit einem SCF zu einem einphasigen Gemisch vermengt und anschliessend in eine Form eingespritzt. Durch einen Druckabfall in der Form löst sich das Treibmittel aus der Polymerlösung und verdampft, wodurch sich Mikrozellen ausbilden. Als SCF wird hierbei meistens CO₂ oder Stickstoff eingesetzt. Ein im Stand der Technik bekanntes Verfahren wird beispielsweise in der CN 111 055 420 A offenbart.

### Darstellung der Erfindung

Ein Problem beim Formschäumen mit Treibmittelzusätzen ist die Kontrolle der Porengrösse im Schaum. Des Weiteren wird das Schäumen mit SCF zwar häufig bei thermoplastischem Polyurethan eingesetzt, ist jedoch nach wie vor problematisch bei anderen Materialien, insbesondere bei Polyamiden und Copolymeren davon. Gerade für Schuhkomponenten, insbesondere im Bereich der Laufschuhe, ist die Kontrolle der Porengrösse des Schaums hochrelevant, da einerseits eine möglichst geringe Dichte erreicht werden soll um das Gesamtgewicht des Schuhs zu reduzieren und andererseits eine hohe Stabilität gewährleistet sein muss.

Es ist daher die allgemeine Aufgabe den Stand der Technik der Herstellung geschäumter Schuhkomponenten weiterzuentwickeln und vorzugsweise ein oder mehrere der obengenannten Nachteile des Stands der Technik ganz oder teilweise zu überwinden. In vorteilhaften Ausführungsformen wird ein Verfahren bereitgestellt, bei welchem die Porenbildung, insbesondere die Porengrösse des geschäumten Materials genauer kontrolliert werden kann. In weiteren vorteilhaften Ausführungsformen wird ein Verfahren bereitgestellt, welches es ermöglicht eine geschäumte Schuhkomponente herzustellen, die eine geringe Dichte aufweist, gleichzeitig jedoch eine hohe Stabilität gewährleistet. In weiteren Ausführungsformen wird ein im Vergleich zum Stand der Technik energieeffizienteres Verfahren zur Herstellung einer formgeschäumten Schuhkomponente bereitgestellt.

Die allgemeine Aufgabe wird durch den Gegenstand der unabhängigen Patentansprüche gelöst. Weitere vorteilhafte Ausführungsformen ergeben sich aus den abhängigen Ansprüchen und der Gesamtoffenbarung.

Ein erster Aspekt betrifft ein Verfahren zur Herstellung einer formgeschäumten Schuhkomponente, umfassend die Schritte a. Bereitstellen einer Polymerzusammensetzung; b. Vorbehandlung der Polymerzusammensetzung umfassend das Binden eines physikalischen Treibmittels an oder in der Polymerzusammensetzung in einem Autoklav bei einem ersten Druck und einer ersten Temperatur; und c. Schäumen der vorbehandelten Polymerzusammensetzung umfassend das Schmelzen der Polymerzusammensetzung zur Herstellung einer geschmolzenen Polymerzusammensetzung und Schäumen der geschmolzenen Polymerzusammensetzung durch Expansion des Treibmittels. Die Vorbehandlung der Polymerzusammensetzung im Autoklav ermöglicht es eine Schuhkomponente von geringer Dichte, insbesondere mit einer Dichte von 0.05 g/cm³ bis 0.5 g/cm³, vorzugsweise von 0.1 g/cm³ bis 0.3 g/cm³ herzustellen.

Die Vorbehandlung der Polymerzusammensetzung mit dem Treibmittel kann beispielsweise eine Imprägnierung umfassen. Dabei kann das erste Treibmittel an der Oberfläche der Polymerzusammensetzung binden. Dies kann sowohl das Binden des ersten Treibmittels an der äusseren Oberfläche umfassen, als auch das Binden innerhalb der Polymerzusammensetzung, wobei das Treibmittel in die Polymerzusammensetzung hinein diffundiert. Die Vorbehandlung hat unter anderem den Vorteil, dass die formgeschäumte Komponente weniger Materialschrumpfung und Verziehung nach der Herstellung zeigt als eine formgeschäumte Komponente, welche nicht gemäss Schritt b. in einem Autoklav vorbehandelt wird.

Die Polymerzusammensetzung kann typischerweise eine gewisse Porosität aufweisen, sodass das Treibmittel besser in die einzelnen Polymerpartikel eindringen kann. Typischerweise sind der erste Druck und die erste Temperatur grösser als der Normaldruck (1 bar), bzw. höher als Raumtemperatur (25 °C). Der Fachmann versteht, dass die Bezeichnungen erster Druck und erste Temperatur (bzw. zweiter Druck, zweite Temperatur, etc.) sofern nicht anders angegeben, auch einen Temperatur- bzw. Druckbereich umfassen kann, innerhalb welchem diese Parameter gehalten werden. Verglichen mit einem Prozess ohne Schritt b. ermöglicht der erfindungsgemässe Prozess die Herstellung einer formgeschäumten Schuhkomponente mit kleineren Poren im Schaum und einer deutlich homogeneren Verteilung der Poren über die gesamte formgeschäumte Komponente. Zudem wird das Gewicht der formgeschäumten Komponente reduziert, was vorteilhaft für den Läufer ist, da dieser weniger schnell ermüdet. Typische Beispiele geeigneter kommerziell erhältlicher Polymerzusammensetzungen, welche direkt ohne weitere Vorbehandlung eingesetzt werden können sind Polyetherblockamid wie PEBAX 2533 (CAMPUSplastics), PEBAX 3533 (CAMPUSplastics), PEBAX 35R53 (CAMPUSplastics), oder Polyamid wie RILSAN BZMNO (CAMPUSplastics, PA11), VESTAMID E40-S3 (Evonik Industries AG, PA12), VESTAMID E47-S1 (Evonik Industries AG, PA12).

Die Polymerzusammensetzung kann dabei beispielsweise nach DIN 62 eine Wasseraufnahme von 0.8 bis 1.2 aufweisen. Typischerweise ist die Dichte nach ISO 1183 der Polymerzusammensetzung zwischen 0.9 und 1.1 g/cm³.

Die Expansion des Treibmittels erfolgt typischerweise durch einen Druckabfall, welcher beispielsweise bereits bei der Injektion bzw. Zuführen der geschmolzenen Polymerzusammensetzung in eine Kavität des Formwerkzeugs auftreten kann, und/oder auch nach der Injektion bzw. dem Zuführen, beispielsweise durch Volumenerweiterung der Kavität des Formwerkzeugs und/oder durch Öffnen von Ventilen des Formwerkzeugs, ausgelöst werden kann.

Typischerweise erfolgt der Schritt c. direkt im Anschluss an die Vorbehandlung aus Schritt b. Des Weiteren kann Schritt b. der einzige Schritt des Verfahrens darstellen, in welchem ein Treibmittel, insbesondere ein physikalisches Treibmittel verwendet wird. Der Schritt c. und optional der Schritt a., wird in Abwesenheit eines weiteren, zusätzlichen Treibmittels durchgeführt.

In einigen Ausführungsformen ist das Treibmittel ausgewählt aus CO₂, N₂ und Mischungen davon. Für das Treibmittel ist CO₂ zu bevorzugen, da dieses typischerweise, insbesondere aufgrund seiner physikalisch-chemischen Eigenschaften besser löslich in der Polymerzusammensetzung ist und besser gebunden wird. Dies gilt vor allem dann, wenn polare thermoplastische Elastomere, wie Polyurethan, Polyamid oder Derivate davon verwendet werden.

In einigen Ausführungsformen kann bei der Vorbehandlung in Schritt b. 3 bis 8 Gew.%, vorzugsweise 5 bis 6 Gew.%, CO₂ bezogen auf die Polymerzusammensetzung an oder in der Polymerzusammensetzung gebunden werden. Hierdurch kann eine formgeschäumte Schuhkomponente mit vorteilhafter Dichte von etwa 0.1 bis 0.3 g/cm³ erreicht werden.

Das Schäumen wird ganz oder teilweise mittels Formpressen oder mittels Spritzguss in einem vom Autoklaven separaten Formwerkzeug durchgeführt. Typischerweise wird die in Schritt b. vorbehandelte Polymerzusammensetzung daher nach der Vorbehandlung aus dem Autoklav entfernt und in das entsprechende separate Formwerkzeug eingebracht. Dies kann vollautomatisch, halbautomatisch oder manuell geschehen.

In weiteren Ausführungsformen kann der das Formwerkzeug eine volumenerweiterbare Kavität aufweisen, deren Volumen während dem Schäumen erweitert wird. Dabei wird typsicherweise während der Injektion bzw. dem Einbringen der Polymerzusammensetzung und/oder während dem Schäumen das Volumen der Kavität erweitert. Dies kann beispielsweise durch mindestens eine bewegliche Wand des Formwerkzeugs erreicht werden, welche unter Kontrolle eine Steuereinheit kontrolliert bewegt werden kann, sodass sich das Volumen der Kavität vergrössert.

In einigen Ausführungsformen wird die Polymerzusammensetzung in Schritt a. mit einem weiteren Formwerkzeug, insbesondere mittels Spritzgiessen, bereitgestellt. Als Ausgangsstoff für die Polymerzusammensetzung kann daher z.B. ein Polymergranulat, insbesondere ein Polyamid, ein Polyetherblockamid, ein thermoplastisches Polyurethan, PET oder Polybutylenterephtalat (PBT) oder Mischungen daraus, verwendet werden. Insbesondere kann die Polymerzusammensetzung mittels Spritzgiessen ausgehend von Polymergranulat bereitgestellt werden.

In einigen Ausführungsformen umfasst das Bereitstellen der Polymerzusammensetzung in Schritt a. das Herstellen einer Vorform der Schuhkomponente, insbesondere der Schuhsohle. In solchen Ausführungsformen kann die Polymerzusammensetzung in Schritt b. daher als Vorform vorliegen. Vorzugsweise ist die in Schritt a. hergestellte Vorform bereits für die herzustellende Schuhkomponente portioniert, d.h. die Menge des für die eine herzustellende Schuhkomponente benötigten Polymermaterials entspricht der Menge des Polymermaterials der einen Vorform.

Vorzugsweise liegt die Polymerzusammensetzung, bzw. die Vorform vor der Vorbehandlung in Schritt b. als Polymerblock vor. Beispielsweise kann diese/r wie obenstehend beschrieben, mittels Spritzgiessen in Schritt a. bereitgestellt werden.

In weiteren Ausführungsformen beträgt der erste Druck in Schritt b. 25 bar bis 55 bar. Unabhängig davon kann die erste Temperatur in Schritt b. 0 °C bis 150 °C, insbesondere 40 °C bis 1 20 °C betragen. Vorzugsweise liegt die erste Temperatur oberhalb der Raumtemperatur, da hierdurch das Binden des physikalischen Treibmittels am und in der Polymerzusammensetzung beschleunigt wird. Vor allem die Eindringtiefe des Treibmittels in die Partikel der Polymerzusammensetzung wird dadurch erhöht. Dies ist vorteilhaft, da in die Polymerzusammensetzung eingedrungenes Treibmittel deutlich länger gebunden bleibt. Die imprägnierte Polymerzusammensetzung kann somit länger gelagert und einfacher gehandhabt, insbesondere transferiert, werden, ohne dass signifikante Mengen des physikalischen Treibmittels verloren gehen. Andererseits darf die erste Temperatur nicht zu hoch gewählt werden, da hierdurch Polymermaterial, insbesondere thermoplastisches Material wie Polyamid oder Polyetherblockamid (PEBA/PEBAX^{®}) teilweise gespalten oder degeneriert werden kann. Dies ist für den Einsatz im Schuhbereich problematisch, da ein solches teilweise degradierendes Material im Laufe der Nutzung des Schuhs schnell zu einer mangelnden Dämpfung führen kann, was beim Träger zu Knie-, Hüft- und Fussgelenksschmerzen führen kann.

In einigen Ausführungsformen wird die Polymerzusammensetzung vor Schritt b. durch Erwärmen auf 30 bis 130° C, insbesondere auf 60 °C bis 120 °C, insbesondere auf 50 °C bis 90 °C, getrocknet, wodurch die Menge an absorbierten, bzw. absorbierbaren Treibmittel in der Polymerzusammensetzung erhöht wird. Die Trocknung kann dabei bis zu einem Restfeuchtegehalt von maximal 0.02% erfolgen.

In weiteren Ausführungsformen werden der erste Druck und die erste Temperatur derart ausgewählt, bzw. eingestellt, dass das Treibmittel in Schritt b. als superkritisches Fluid vorliegt.

In weiteren Ausführungsformen ist das Formwerkezug mit einer Gasgegendruckvorrichtung ausgestattet, mittels welcher zumindest während einer Teildauer der Injektion und/oder während einer Teildauer des Schäumens ein Gegendruck, vorzugsweise von >0 bar bis 40 bar, insbesondere 1 bar bis 40 bar, auf die Polymerzusammensetzung ausgeübt werden kann. Durch Ausüben eines Gegendrucks kann die Expansion des Treibmittels verlangsamt, bzw. abgeschwächt werden. Hierdurch kann eine bessere Kontrolle der Porengrösse und Zellstruktur der formgeschäumten Komponente, sowie eine gleichmässigere Verteilung, erreicht werden.

In weiteren Ausführungsformen wird die Polymerzusammensetzung in Schritt b. für 2 Stunden bis 8 Stunden, vorzugsweise für 2 Stunden bis 5 Stunden bei dem ersten Druck und der ersten Temperatur gehalten. Typischerweise reicht dieser Zeitraum aus um eine ausreichende Menge des ersten Treibmittels am, bzw. in der Polymerzusammensetzung zu binden.

In einigen Ausführungsformen wird nach Schritt b. die in Schritt b. vorbehandelte Polymerzusammensetzung unter einem zweiten Druck in das Formwerkzeug geführt. Der zweite Druck kann dabei vorzugsweise mindestens 50%, insbesondere mindestens 75%, insbesondere mindestens 90%, insbesondere mindestens 95%, insbesondere mindestens 100%, des ersten Drucks betragen. Hierdurch wird sichergestellt, dass keine signifikante Menge des gebundenen Treibmittels während dem Transfer in das Formschäumungssystem desorbiert. Hierbei hat sich herausgestellt, dass bereits ein Druck, der nur 50% des ersten Drucks beträgt, ausreichend ist, um die Desorption im Wesentlichen zu unterbinden. Der zweite Druck beträgt typischerweise nicht mehr als 200%, insbesondere nicht mehr als 150%, insbesondere nicht mehr als 100%, des ersten Drucks.

In weiteren Ausführungsformen weist die Polymerzusammensetzung eine Shore Härte von 70 bis 85 auf. In einigen Ausführungsformen weist die Polymerzusammensetzung eine Dichte von 0.9 g/cm³ bis 1.5 g/cm³, vorzugsweise 1.0 g/cm³ bis 1.2 g/cm³, auf. Je dichter die Polymerzusammensetzung ausgebildet ist, desto geringer ist typischerweise die Menge an gebundenem Treibmittel. Besonders vorteilhaft hinsichtlich der Aufnahme und Absorption des physikalischen Treibmittels, insbesondere von CO₂, ist hierbei die Verwendung von Polyamid und Polyetherblockamid als Polymerzusammensetzung.

In einigen Ausführungsformen umfasst die Polymerzusammensetzung ein thermoplastisches Elastomer, insbesondere ein Polyamid, ein Polyetherblockamid oder ein thermoplastisches Polyurethan. Alternativ kann die Polymerzusammensetzung aus einem thermoplastischen Elastomer, insbesondere einem Polyamid, einem Polyetherblockamid oder einem thermoplastischen Polyurethan bestehen.

In weiteren Ausführungsformen ist die Schuhkomponente eine Schuhsohle, insbesondere eine Mittelsohle. Eine solche Schuhsohle kann bereitgestellt werden, indem der die Kavität des Formwerkzeugs derart ausgebildet ist, dass beim Formschäumen in Schritt c. eine Schuhsohle entsteht.

In einigen Ausführungsformen kann die in Schritt c. hergestellte Schuhkomponente ein Rohling einer Schuhkomponente darstellen, welcher in einem nachfolgenden Prozessschritt zur fertigen Schuhkomponente verarbeitet wird. Beispielsweise kann dies ein Rohling einer Schuhsohle sein, welcher anschliessend durch (weiteres) Formpressen zu einer fertigen Sohle gepresst wird oder welcher anschliessend gefärbt oder in sonstiger Weise oberflächenbehandelt wird.

Ein weiterer Aspekt betrifft eine formgeschäumte Schuhkomponente, insbesondere eine Schuhsohle, hergestellt nach einem Verfahren gemäss den hier offenbarten Ausführungsformen.

Die formgeschäumte Schuhkomponente weist eine Dichte von 0.05 g/cm³ bis 0.5 g/cm³, vorzugsweise von 0.1 g/cm³ bis 0.3 g/cm³ und/oder eine Asker C Härte von 45 bis 65 auf.

## Patentansprüche

1. Verfahren zur Herstellung einer formgeschäumten Schuhkomponente, umfassend die Schritte:
a. Bereitstellen einer Polymerzusammensetzung;
b. Vorbehandlung der Polymerzusammensetzung umfassend das Binden eines physikalischen Treibmittels an oder in der Polymerzusammensetzung in einem Autoklav bei einem ersten Druck und einer ersten Temperatur;
c. Schäumen der vorbehandelten Polymerzusammensetzung umfassend das Schmelzen der Polymerzusammensetzung zur Herstellung einer geschmolzenen Polymerzusammensetzung und Schäumen der geschmolzenen Polymerzusammensetzung durch Expansion des physikalischen Treibmittels, wobei das Schäumen in Abwesenheit eines weiteren, zusätzlichen Treibmittels durchgeführt wird, und wobei
d. das Schäumen ganz oder teilweise mittels Formpressens oder mittels Spritzguss in einem vom Autoklaven separaten Formwerkzeug durchgeführt wird.

2. Verfahren nach Anspruch 1, wobei das physikalische Treibmittel ausgewählt ist CO₂, N₂ und Mischungen davon.

3. Verfahren nach einem der vorherigen Ansprüche, wobei das Formwerkzeug eine volumenerweiterbare Kavität aufweist deren Volumen während dem Schäumen erweitert wird.

4. Verfahren nach einem der vorherigen Ansprüche, wobei die Polymerzusammensetzung in Schritt a. mit einem weiteren Formwerkzeug, insbesondere mittels Spritzgiessen, bereitgestellt wird.

5. Verfahren nach einem der vorherigen Ansprüche, wobei die Polymerzusammensetzung vor der Vorbehandlung in Schritt b. als Polymerblock vorliegt und/oder wobei die Polymerzusammensetzung vor Schritt b. durch Erwärmen auf 30 bis 130° C getrocknet wird.

6. Verfahren nach einem der vorherigen Ansprüche, wobei in Schritt b. der erste Druck 35 bar bis 55 bar, und/oder die erste Temperatur 0 °C bis 150 °C, vorzugsweise 40 °C bis 120 °C beträgt.

7. Verfahren nach einem der vorherigen Ansprüche, wobei das Treibmittel in Schritt b. als superkritisches Fluid vorliegt.

8. Verfahren nach einem der vorherigen Ansprüche, wobei das Formwerkzeug mit einer Gasgegendruckvorrichtung ausgestattet ist, mittels welcher zumindest während einer Teildauer der Injektion und/oder während einer Teildauer des Schäumens ein Gegendruck, vorzugsweise von >0 bar bis 40 bar, auf die Polymerzusammensetzung ausgeübt wird.

9. Verfahren nach einem der vorherigen Ansprüche, wobei in Schritt b. die Polymerzusammensetzung für 2 Stunden bis 8 Stunden, vorzugsweise für 2 Stunden bis 5 Stunden bei dem ersten Druck und der ersten Temperatur gehalten wird.

10. Verfahren nach einem der vorherigen Ansprüche, wobei die Polymerzusammensetzung eine Shore Härte von 70 bis 85, und/oder eine Dichte von 0.9 g/cm³ bis 1.5 g/cm³, vorzugsweise 1.0 g/cm³ bis 1.2 g/cm³, aufweist.

11. Verfahren nach einem der vorherigen Ansprüche, wobei die Polymerzusammensetzung ein thermoplastisches Elastomer, insbesondere ein Polyamid, ein Polyetherblockamid oder ein thermoplastisches Polyurethan, umfasst.

12. Verfahren nach einem der vorherigen Ansprüche, wobei die Schuhkomponente eine Schuhsohle, insbesondere eine Mittelsohle ist, und wobei bevorzugt die Schuhsohle, in einem zusätzlichen Schritt mit einem Schuhoberteil verbunden wird, sodass ein Schuh, insbesondere ein Laufschuh hergestellt wird.

13. Verfahren nach einem der vorherigen Ansprüche, wobei nach dem Schäumen der geschmolzenen Polymerzusammensetzung durch Expansion des Treibmittels die hergestellte formgeschäumte Schuhkomponente durch Formpressen nachgeformt wird.

14. Formgeschäumte Schuhkomponente, insbesondere eine Schuhsohle, hergestellt nach dem Verfahren gemäss einem der Ansprüche 1 bis 13, welche eine Dichte von 0.05 g/cm3 bis 0.5 g/cm³, vorzugsweise von 0.1 g/cm³ bis 0.3 g/cm³ aufweist; und/oder welche eine Asker C Härte von 45 bis 65 aufweist.

## Claims

1. A method of producing a foam-molded footwear component comprising the steps of:
a. Providing a polymer composition;
b. pretreating the polymer composition comprising binding a physical blowing agent to or in the polymer composition in an autoclave at a first pressure and a first temperature;
c. foaming the pretreated polymer composition comprising melting the polymer composition to produce a molten polymer composition and foaming the molten polymer composition by expansion of the physical blowing agent, wherein the foaming is carried out in the absence of a further, additional blowing agent, and wherein
d. the foaming is carried out partially or completely by compression molding or by injection molding in a mold separate from the autoclave.

2. The method according to claim 1, wherein the physical blowing agent is selected from CO₂, N₂ and mixtures thereof.

3. The method according to any one of the preceding claims, wherein the molding tool comprises a volume-expandable cavity whose volume is expanded during foaming.

4. The method according to any one of the preceding claims, wherein the polymer composition is provided in step a. with a further molding tool, in particular by injection molding.

5. The method according to any one of the preceding claims, wherein the polymer composition is present as a polymer block prior to the pretreatment in step b. and/or wherein the polymer composition is dried by heating to 30 to 130° C. prior to step b.

6. The method according to any one of the preceding claims, wherein in step b. the first pressure is 35 bar to 55 bar, and/or the first temperature is 0 °C to 150 °C, preferably 40 °C to 120 °C.

7. The method according to any one of the preceding claims, wherein in step b. the blowing agent is present as a supercritical fluid.

8. Method according to any one of the preceding claims, wherein the molding tool is equipped with a gas counterpressure device by means of which a counterpressure, preferably from >0 bar to 40 bar, is exerted on the polymer composition at least during a partial duration of the injection and/or during a partial duration of the foaming.

9. The method according to any one of the preceding claims, wherein in step b. the polymer composition is maintained at the first pressure and at the first temperature for 2 hours to 8 hours, preferably for 2 hours to 5 hours.

10. The method according to any one of the preceding claims, wherein the polymer composition has a Shore hardness of 70 to 85, and/or a density of 0.9 g/cm³ to 1.5 g/cm³, preferably 1.0 g/cm³ to 1.2 g/cm³.

11. The method according to any one of the preceding claims, wherein the polymer composition comprises a thermoplastic elastomer, in particular a polyamide, a polyether block amide or a thermoplastic polyurethane.

12. The method according to any one of the preceding claims, wherein the footwear component is a shoe sole, in particular a midsole, and wherein preferably the shoe sole is joined to a shoe upper in an additional step, so that a shoe, in particular a running shoe, is produced.

13. The method according to any one of the preceding claims, wherein after foaming of the molten polymer composition by expansion of the blowing agent, the produced foam-molded footwear component is post-molded by compression molding.

14. A foam-molded footwear component, in particular a shoe sole, produced by the method according to any one of claims 1 to 13, which has a density of from 0.05 g/cm³ to 0.5 g/cm³, preferably from 0.1 g/cm³ to 0.3 g/cm³; and/or which has an Asker C hardness of from 45 to 65.

## Revendications

1. Procédé de fabrication d'un composant de chaussure en mousse moulée, comprenant les étapes consistant en :
a. Fournir une composition polymère ;
b. Prétraitement de la composition polymère comprenant la liaison d'un agent d'expansion physique à ou dans la composition polymère dans un autoclave à une première pression et à une première température ;
c. Moussage de la composition polymère prétraitée comprenant la fusion de la composition polymère pour produire une composition polymère fondue et le moussage de la composition polymère fondue par expansion de l'agent d'expansion physique, dans lequel le moussage est effectué en l'absence d'un autre agent d'expansion supplémentaire, et dans lequel
d. le moussage est réalisé en tout ou partie par moulage par compression ou par moulage par injection dans un moule séparé de l'autoclave.

2. Procédé selon la revendication 1, dans lequel l'agent d'expansion physique est choisi parmi CO₂, N₂ et leurs mélanges.

3. Procédé selon l'une quelconque des revendications précédentes, dans lequel l'outillage de moulage comprend une cavité expansible en volume dont le volume est augmenté pendant le moussage.

4. Procédé selon l'une quelconque des revendications précédentes, dans lequel la composition polymère est préparée à l'étape a. avec un autre outillage de moulage, notamment par injection.

5. Procédé selon l'une quelconque des revendications précédentes, dans lequel la composition polymère se présente sous forme de bloc polymère avant le prétraitement de l'étape b. et/ou dans lequel la composition polymère est séchée avant l'étape b. par chauffage entre 30 et 130°C.

6. Procédé selon l'une quelconque des revendications précédentes, dans lequel à l'étape b. la première pression est de 35 bars à 55 bars, et/ou la première température est de 0°C à 1 50°C, de préférence de 40°C à 120°C.

7. Procédé selon l'une quelconque des revendications précédentes, dans lequel à l'étape b. l'agent d'expansion se présente sous la forme d'un fluide supercritique.

8. Procédé selon l'une quelconque des revendications précédentes, dans lequel l'outillage de moulage est équipé d'un dispositif de contre-pression de gaz au moyen duquel une contre-pression, de préférence de >0 bar à 40 bar, est exercée sur la composition polymère pendant au moins une partie de la durée de l'injection et/ou pendant une partie de la durée du moussage.

9. Procédé selon l'une quelconque des revendications précédentes, dans lequel, à l'étape b., la composition polymère est maintenue à la première pression et à la première température pendant 2 heures à 8 heures, de préférence pendant 2 heures à 5 heures.

10. Procédé selon l'une quelconque des revendications précédentes, dans lequel la composition polymère présente une dureté Shore de 70 à 85, et/ou une densité de 0,9 g/cm³ à 1,5 g/cm³, de préférence de 1,0 g/cm³ à 1,2 g/cm³.

11. Procédé selon l'une quelconque des revendications précédentes, dans lequel la composition polymère comprend un élastomère thermoplastique, notamment un polyamide, un polyéther bloc amide ou un polyuréthane thermoplastique.

12. Procédé selon l'une quelconque des revendications précédentes, dans lequel le composant de la chaussure est une semelle de chaussure, en particulier une semelle intercalaire, et dans lequel, de préférence, la semelle de chaussure est assemblée, lors d'une étape supplémentaire, à une tige de chaussure, de sorte à fabriquer une chaussure, en particulier une chaussure de course.

13. Procédé selon l'une quelconque des revendications précédentes, dans lequel, après le moussage de la composition polymère fondue par expansion de l'agent d'expansion, le composant de la chaussure en mousse moulée est post-moulée par moulage par compression.

14. Composant de la chaussure en mousse moulée, en particulier une semelle de chaussure, fabriqué par le procédé selon l'une quelconque des revendications 1 à 13, qui présente une densité de 0,05 g/cm³ à 0,5 g/cm³, de préférence de 0,1 g/cm³ à 0,3 g/cm³; et/ou qui présente une dureté Asker C de 45 à 65.
